# EUROPÄISCHE PATENTSCHRIFT

(11) **EP 4 038 342 B1**
(45) Veröffentlichungstag und Bekanntmachung des Hinweises auf die Patenterteilung: **30.10.2024**
(21) Anmeldenummer: 20785469.6
(22) Anmeldetag: 28.09.2020
(51) Int. Cl.: G01B 11/27

(54) **OPTISCHES VERFAHREN ZUR MESSUNG UND ÜBERWACHUNG VON AUSRICHTUNGSFEHLERN ZWISCHEN GEKUPPELTEN ROTIERENDEN WELLEN**
OPTICAL METHOD FOR MEASURING AND MONITORING ALIGNMENT ERRORS BETWEEN COUPLED ROTATING SHAFTS
PROCÉDÉ OPTIQUE PERMETTANT LA MESURE ET LA SURVEILLANCE D'ERREURS D'ALIGNEMENT ENTRE DES ARBRES ROTATIFS ACCOUPLÉS

(30) Priorität: 30.09.2019 DE 102019214975
(43) Veröffentlichungstag der Anmeldung: 10.08.2022
(73) Patentinhaber: Fraunhofer-Gesellschaft zur Förderung der angewandten Forschung e.V., 80686 München (DE)
(72) Erfinder: ZHANG, Hongkun, 27572 Bremerhaven (DE)
(74) Vertreter: Pfenning, Meinig & Partner mbB
(86) Internationale Anmeldenummer: PCT/EP2020/077044
(87) Internationale Veröffentlichungsnummer: WO 2021/063858

(56) Entgegenhaltungen:
- DE-B3- 102011 101 509
- US-A- 5 703 796
- US-A1- 2015 377 301

## Beschreibung

Die Schutzrechtsanmeldung betrifft eine Anordnung und ein Verfahren zur Messung und kontinuierlichen Überwachung von Ausrichtungsfehlern zwischen gekuppelten rotierenden Wellen. Im Kontext der vorliegenden Anmeldung werden unter Ausrichtungsfehlern räumliche Lagedifferenzen der Rotationsachsen an den einander zugewandten Wellenenden der rotierenden Wellen verstanden.

Derartige Ausrichtungsfehler werden unter anderem verursacht durch Fertigungstoleranzen, Aufstellungs- und Ausrichtungsungenauigkeiten, Unwuchten oder auch durch das Zusammenwirken von Schwerkraft und Materialeigenschaften wie zum Beispiel der Steifigkeit der Lagerung, der Lagerböcke oder des Maschinenfundamentes, die unter ungünstigen Umständen zu Deformationen und daraus resultierenden Fehlstellungen der Wellenachsen führen können. Die Wirkung von Ausrichtungsfehlern sind zum Beispiel Kraftwirkungen, die zu höheren Lagerbelastungen, Schwingungen, Schallemissionen und Verschleiß führen. Ausrichtungsfehler werden im Allgemeinen nur so weit minimiert, dass die dafür zulässigen Grenzwerte eingehalten werden.

Eine typische Lösung, die zu einer Verringerung der Auswirkungen von Ausrichtungsfehlern führt, ist der Einsatz von flexiblen Kupplungen für die Verbindung zweier Wellenenden. Flexible Kupplungen werden für bestimmte Einsatzbereiche ausgelegt, beispielsweise für einen bestimmten maximalen Wellenversatz, Winkelversatz oder eine axiale Dehnung. Wird dieser zulässige Bereich während des Betriebes verlassen, beispielsweise durch zu hohe und unvorhergesehene Störkräfte oder Verschleiß, kann es zu Schäden im Antriebsstrang kommen, die bis zum Totalausfall der Anlage führen und mit hohen Kosten verbunden sein können. Es ist deshalb sinnvoll, Ausrichtungsfehler der Wellen während des Betriebes zu überwachen, auf die Einhaltung vorgegebener Grenzwerte zu prüfen und gegebenenfalls die übergeordnete Anlagenleitebene zu informieren. Eine fortlaufende Überwachung bietet den Vorteil, Serviceintervalle in Bezug auf dieses Schadbild flexibel und nach Bedarf auszurichten.

Die fortlaufende Überwachung des Ausrichtungszustandes drehender Anlagenkomponenten während des Betriebes erfordert im Regelfall berührungsfreie Messverfahren, zum Beispiel über Wirbelstrom-Abstandssensoren oder Laser-Entfernungsmessung, die jedoch zusätzliche Instrumentierung und Platz benötigen. Darüber hinaus besteht der Nachteil dieser Methodik darin, dass auch diese Sensorik eine von der Maschinenausrichtung unabhängige Fixierung benötigt, die oftmals nicht ohne weiteres zur Verfügung steht. Die alternativ dazu möglich Überwachung des Ausrichtungszustandes mit Hilfe eines auf dem Rotor eingerichteten Telemetriesystems ist in der Regel ebenfalls aufwändig und kostenintensiv, so dass ein derartiges Überwachungsverfahren im Allgemeinen nicht angewendet wird.

Eine direkte Messung der Maschinen- und Wellenausrichtung wird deshalb in der Regel nur während des Anlagenaufbaus und der Wartung durchgeführt. Ein mögliches Verfahren zur Ausrichtung wird in der Patentschrift EP3278059B1 vorgestellt, welches mit Kameras und Lichtquellen arbeitet, wobei die Kameras jedoch fest mit den Rotoren verbunden sind, was eine Anwendung des Verfahrens während des Regelbetriebs ausschließt. In der Patentschrift EP2344840B1 wird ein Verfahren beansprucht, das geometrische Muster auf Messmitteln nutzt, welche mit den auszurichtenden Wellen verbunden sind. Eine Anwendung des Verfahrens während des Regelbetriebs ist nicht möglich, so dass eine kontinuierliche Überwachung der Wellenausrichtung mit diesem Verfahren nicht durchgeführt werden kann.

Ferner bezieht sich Druckschrift US 2015/377301 A1 auf eine Kupplungsvorrichtung zum Verbinden einer ersten Welle mit einer zweiten Welle mit Hilfe von zwei zueinander passenden Flanschen, wobei die Flansche mit Mitteln bereitgestellt werden oder versehen sind, die eine visuelle Beobachtung einer axialen oder radialen Fehlausrichtung der Wellen gestatten. In einer Variante ist dabei mindestens ein Flansch mit einem Transducer versehen, der von einer mechanischen Bewegung ausgehend ein elektrisches oder akustisches Signal erzeugen kann und wobei der Transducer das Signal auf Basis einer periodischen Bewegung der Flansche zueinander erzeugt, zumindest wenn die relative Bewegung der zwei Wellen zueinander, die auftritt, wenn die Wellen zueinander eine Fehlausrichtung aufweisen, einen bestimmten Wert überschreitet.

Außerdem betrifft Patentschrift DE 10 2011 101 509 B3 ein Verfahren zur optischen Vermessung einer Welle, umfassend die Schritte Anordnen der Welle auf einer Drehpositioniervorrichtung, Bestimmen der räumlichen Lage der Drehachse, Aufnehmen, mittels einer Sildaufnahmevorrichtung, einer Mehrzahl von Bildern der Welle auf Höhe eines wobei jedem Bild der Winkel seiner jeweilige Aufnahme-Drehwinkelstellung zugeordnet wird, Berechnen einer Wellengeometriegröße mittels Bildverarbeitungsroutinen unter Verwendung der aufgenommenen Bilder des interessierenden Wellenkonturmerkmals. Die Erfindung zeichnet sich dadurch aus, dass die Relativlage der Wellenachse zur Drehachse ermittelt und daraus die räumliche Lage der Wellenachse für jede Aufnahme Drehwinkelstellung berechnet wird und dass während der Aufnahme der Mehrzahl von Bildern die Bildaufnahmevorrichtung entlang ihrer optischen Achse so nachgeführt wird, dass bei Aufnahme jedes einzelnen Bildes ein auf Höhe des interessierenden Wellenkonturmerkmals liegender Referenzpunkt der Wellenachse in der Fokalebene der Bildaufnahmevorrichtung liegt.

Darüber hinaus offenbart die Patentschrift US 5 703 796 A eine Vorrichtung und ein Verfahren zur Ausrichtung einer Gelenkwelle in einem Kraftfahrzeug, einschließlich Lagerung von Getriebe und Hinterachse, mit dem Motorhauptteil. Eine Antriebswelle wird an einem ersten Ende mit dem Getriebe gelagert und an einem zweiten Ende mit der Hinterachse. Ein Zentrallager ist zwecks weiterer Lagerung der Antriebswelle am Motorhauptteil positioniert. Die Position der Gelenkwelle wird im Weiteren gemessen und eine Ausgleichsblechdicke wird für die Installation zwischen Zentrallager und Hauptteil berechnet. Die zu lösende Aufgabe besteht darin, ein berührungsfreies Verfahren zur messtechnischen Bestimmung von Ausrichtungsfehlern zwischen gekuppelten rotierenden Wellen eines Antriebsstranges bereitzustellen, so dass eine kontinuierliche Überwachung der Ausrichtungsfehler und deren zeitlicher Veränderung durchgeführt werden kann.

Die Aufgabe wird mit einer Anordnung nach einem der Ansprüche 1 bis 8 und einem Verfahren nach einem der Ansprüche 9 bis 10 gelöst.

Die Anordnung nach einem der Patentansprüche 1 bis 8 enthält mehrere Körper, die um eine oder mehrere Rotationsachsen rotieren. Auf den vorgenannten Körper werden jeweils ein oder mehrere markante Punkte in einem Abstand von der Rotationsachse des jeweiligen Körpers definiert. Entscheidende Merkmale markanter Punkte sind, dass sie eine begrenzte räumliche Ausdehnung besitzen und in einem bildgebenden Verfahren von ihrer Umgebung unterschieden werden können. Beispiele für markante Punkte sind Körperoberflächenareale mit speziellen Farbgebungen, speziellen reflektierenden Eigenschaften, Erhebungen oder Ausnehmungen in der Körperoberfläche. Als markante Punkte können alternativ auch sich von ihrer Umgebung unterscheidende funktionale Teile des jeweiligen Körpers selbst sein, beispielsweise Kanten, Verschraubungen oder andere Geometrien. Alternativ können markante Punkte als aktive Lichtquellen ausgestaltet sein, beispielsweise als Light Emitting Diode (LED).

Die markanten Punkte besitzen eine begrenzte Ausdehnung s in axialer Richtung, wodurch die Bestimmung ihrer axialen Position in einem Bild ermöglicht wird. Für eine bessere Erkennung der markanten Punkte in Auswertungsverfahren können die markanten Punkte eine charakteristische grafische Form oder Struktur aufweisen. Der Kontrast zwischen den markanten Punkten und ihrer Umgebung kann erhöht werden, in dem speziell auf die Art der markanten Punkte abgestimmte Lichtquellen zur Beleuchtung der Anordnung genutzt werden, zum Beispiel ultraviolette Lichtquellen oder sehr helle aus der Fototechnik bekannte Blitzlichter. Als besonders gut erweist sich die Kombination aus stark reflektierenden markanten Punkten und Lichtquellen, die möglichst alle Farben enthalten, wie beispielsweise Blitzlichtquellen.

Die Anordnung enthält darüber hinaus eine oder mehrere bildgebende Einheiten, beispielsweise optische Kameras für sichtbare oder nicht sichtbare Lichtwellenlängen oder alternativ auch Laserabtast- oder Ultraschallverfahren, die mit einem bildgebenden Verfahren Bilder von den Wellenabschnitten erzeugen, in denen sich die markanten Punkte befinden. Die bildgebenden Einheiten können optional von einer Bildsteuereinheit angesteuert werden, beispielsweise um die Bildaufnahmen zu synchronisieren. Die bildgebenden Einheiten sind so positioniert, dass sie die drehenden Körper nicht berühren. Die Bildebenen in den bildgebenden Einheiten werden so ausgerichtet, dass ihre vom Bildmittelpunkt ausgehenden Normalenvektoren idealerweise zu den Rotationsachsen der rotierenden Körper zeigen und mit den Rotationsachsen einen etwa rechten Winkel bilden. Ein exakt rechter Winkel mit allen Rotationsachsen ist aufgrund von Unterschieden in den räumlichen Lagen der verschiedenen Rotationsachsen im Allgemeinen nicht realisierbar. Darüber hinaus ist es sinnvoll, die bildgebenden Einheiten so zu positionieren, dass sie einen Abschnitt des Wellenstrangs abbilden können, der mindestens zwei markante Punkte enthält, die um voneinander verschiedene Achsen rotieren. Damit ist die Erfassung der markanten Punkte in ein und demselben Bildkoordinatensystem und somit die Berechnung der Lagedifferenzen zwischen verschiedenen Rotationsachsen sehr einfach möglich.

Die Auswerteeinheit besitzt die Aufgabe, aus den erzeugten Bildern die räumlichen Lagen der Rotationsachsen mit dem Ziel zu bestimmen, ihre Lageabweichungen untereinander feststellen zu können. Sie ist dazu mit den bildgebenden Einheiten verbunden, um die Bilder von den bildgebenden Einheiten zu empfangen. Um die Ergebnisse der Auswertung sammeln zu können, ist die Auswerteeinheit mit einer Datensammeleinheit verbunden. Die Auswerteeinheit kann mit einer Sammelsteuereinheit verbunden werden, um die Ergebnisse der Auswertung im Rahmen von Steuerungsaufgaben verwerten zu können. Auswerteeinheit, Datensammeleinheit und die Steuereinheiten können über ein Computernetzwerk miteinander verbunden sein.

Das beanspruchte Verfahren bestimmt mit Hilfe der vorgenannten markanten Punkte die räumliche Lage der Rotationsachsen der vorgenannten Körper zueinander. Die zu bestimmenden Ausrichtungsfehler ergeben sich aus den Lagedifferenzen zwischen verschiedenen Rotationsachsen. Zunächst werden die vorgenannten Körper in Rotation versetzt. Dadurch bewegen sich die markanten Punkte auf jeweils einer Bahn umlaufend um die Rotationsachse des jeweiligen Körpers. Die Umlaufbahnen der markanten Punkte werden auf die Bildebenen der bildgebenden Einheiten projiziert, die auf den dem jeweiligen markanten Punkt zugehörigen Wellenabschnitt ausgerichtet sind.

Die verfahrensgemäße Funktion der bildgebenden Einheiten besteht darin, die Projektion der markanten Punkte in verschiedenen Bahnpositionen in den Bildebenen mit einem oder mehreren Bildern zu erfassen. Um die Bahnbewegung der markanten Punkte möglichst genau abzubilden, ist es notwendig, die Anzahl der pro Zeiteinheit erzeugten Bilder so auf die Drehzahl abzustimmen, dass eine Mehrzahl von Bahnpositionen erfasst werden kann. Es ist beispielsweise auch möglich, mit einer Fotokamera unter Verwendung einer Belichtungszeit, die für eine Umdrehung der Körper benötigt wird, die Erfassung aller im Sichtfeld befindlichen Positionen der markanten Punkte in nur einem einzigen Bild einer bildgebenden Einheit zu bewerkstelligen.

In einem weiteren Verfahrensschritt werden die von den bildgebenden Einheiten erzeugten Bilder an die Auswerteeinheit übergeben. Innerhalb der Auswerteeinheit erfolgt in einem weiteren Verfahrensschritt die Erkennung der Positionen der markanten Punkte im Bild, beispielhaft über einen Schwellwertvergleich der Bildpunkt-Helligkeitswerte bei Verwendung stark reflektierender markanter Punkte. Alternativ können andere Kriterien zur Identifikation der markanten Punkte im Bild herangezogen werden, beispielsweise Schwellwertvergleiche der Farbwerte, Grauwerte oder Korrelationen mit vorgegebenen Mustern. Als Ergebnis dieses Verfahrensschrittes liegen die Positionen der markanten Punkte vor, beispielsweise in Form von Koordinaten innerhalb eines zur jeweiligen bildgebenden Einheit gehörigen Koordinatensystems. Alle Positionswerte für einen markanten Punkt werden zu einer Bild-Bahnkurve zusammengefasst. Mit den Bild-Bahnkurven ist die Abbildung der Bewegungsinformation der markanten Punkte in den Bildebenen der bildgebenden Einheiten bekannt. Auf dieser Basis wird aus den Bild-Bahnkurvendaten die räumliche Lage der Rotationsachsen bestimmt, in dem die Mittelpunkte der Bahnkurven der markanten Punkte und die Normalenvektoren der Ebenen, in denen sich die Bahnkurven befinden, ermittelt werden. Mit Mittelpunkt und Normalenvektor wird die räumliche Lage einer Rotationsachse eindeutig beschrieben. Ein Vergleich der Lagen der verschiedenen Rotationsachsen quantifiziert die Ausrichtungsfehler.

Die ermittelten Lageinformationen der Rotationsachsen werden optional an eine Datensammeleinheit sowie optional an eine Sammelsteuereinheit übermittelt. Die Datensammeleinheit ermöglicht es, die Veränderungen über einen längeren Zeitraum zu verfolgen und beispielsweise eine Wartungsplanung zu realisieren. Die Sammelsteuereinheit kann die aktuell übermittelten Lagedaten mit Sollwerten vergleichen und auf das Vergleichsergebnis abgestimmte Steuersignale generieren.

Die Figuren dienen der Erläuterung des Gegenstandes der vorliegenden Schutzrechtsanmeldung:
Figur 1 zeigt beispielhaft eine Anordnung mit einem ersten rotierenden Körpers mit einer Rotationsachse und einem zweiten rotierenden Körpers mit einer Rotationsachse, einem flexiblen Element, das beide vorgenannten Körper verbindet, einer bildgebenden Einheit und einer Beleuchtungsvorrichtung. Darüber hinaus wird die Verknüpfung der bildgebenden Einheit mit der Auswerteeinheit gezeigt sowie deren Verbindung zur Datensammeleinheit, zu einer Bildsteuereinheit sowie einer Sammelsteuereinheit.
Figur 2 zeigt beispielhaft eine Anordnung in den Schnittebenen, die senkrecht zu einer Rotationsachse angeordnet sind und sich in den axialen Positionen der flexiblen Elemente befinden. In den genannten Schnittebenen befinden sich jeweils zwei bildgebende Einheiten.
Figur 3 zeigt die Darstellung der Bildebene einer bildgebenden Einheit sowie des Bildmittelpunktes der Bildebene, der als Fußpunkt für den Normalenvektor dient.
Figur 4 enthält die Darstellung der Verfahrensschritte in einem Ablaufdiagramm.
Figur 5 zeigt eine beispielhafte Anordnung basierend auf der Anordnung der Figuren 1 bis 3, wobei sich die Rotationsachsen des ersten rotierenden Körpers und des zweiten rotierenden Körpers in einer Ebene befinden und die Bildebene der bildgebenden Einheit parallel zur Ebene der Rotationsachsen angeordnet ist.
Figur 6 zeigt eine beispielhafte Anordnung basierend auf Figur 1 mit drei rotierenden Körpern und zwei flexiblen Elementen.
Figur 7 enhält eine Anordnung basierend auf den Figuren 5 und 6, wobei sich die Rotationsachsen der rotierenden Körper in einer Ebene befinden und die Bildebenen der bildgebenden Einheiten parallel zur Ebene der Rotationsachsen angeordnet sind.

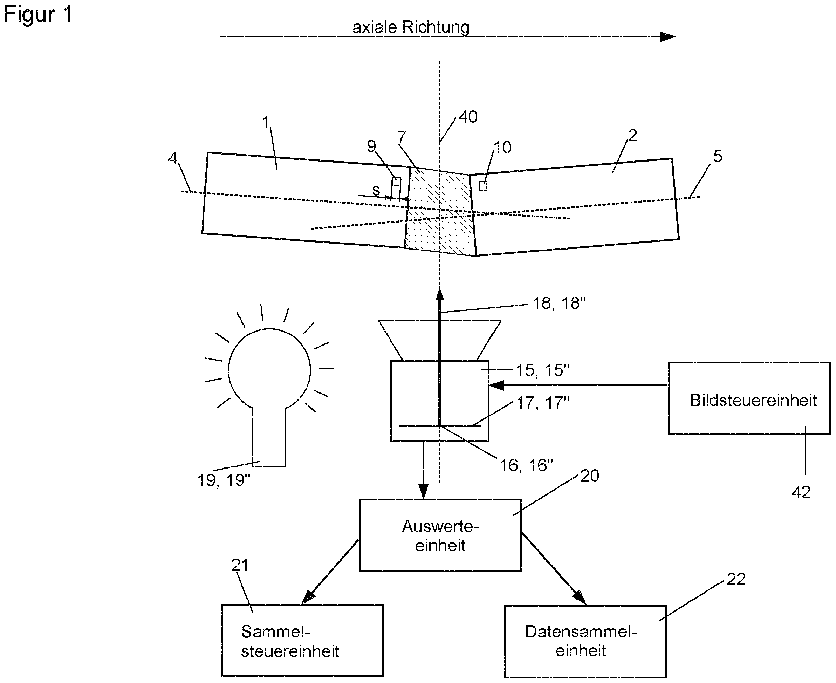

Figur 1 zeigt eine beispielhafte Ausführungsanordnung. Der erste Körper ist in Form einer Welle 1 ausgebildet. Der zweite Körper ist ebenfalls in Form einer Welle 2 ausgebildet. Beide Wellen sind mit einem flexiblen Element 7 verbunden, das eine Drehbewegung von Welle 1 auf Welle 2, aber auch von Welle 2 auf Welle 1 übertragen kann. Welle 1 besitzt eine Rotationsachse 4, um die sie eine rotierende Bewegung ausführen kann. Welle 2 besitzt eine Rotationsachse 5, um die sie eine rotierende Bewegung ausführen kann. Darüber hinaus ist ein markanter Punkt 9 auf Welle 1 und ein markanter Punkt 10 auf Welle 2 angeordnet. Beispielsweise sind die markanten Punkte als Reflektoren ausgeführt. Die axiale Ausdehnung der markanten Punkte hat den Wert *s*, der so klein wie möglich gewählt ist, ohne die bildliche Auflösung der Kamera zu unterschreiten.

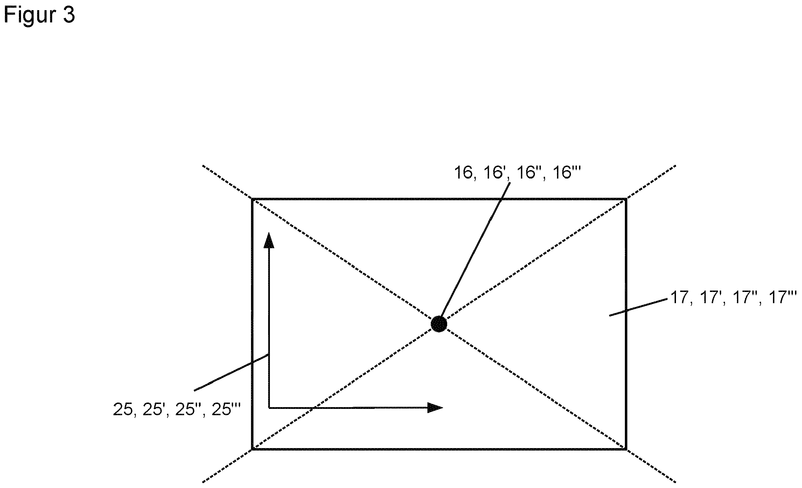

Die bildgebende Einheit ist als Kamera 15 ausgeführt mit einer Bildebene 17 und dem vom Mittelpunkt 16 der Bildebene 17, der in Figur 3 gezeigt wird, ausgehenden Normalenvektor 18 der Bildebene 17. Eine Position innerhalb einer Bildebene 17 wird mit Hilfe eines zweidimensionalen Bildkoordinatensystems 25 beschrieben. Der Normalenvektor 18 zeigt in Richtung der Rotationsachsen 4 und 5 der Welle 1 und der Welle 2 und ist annähernd orthogonal zu den Rotationsachsen 4 und 5. Die Kamera 15 ist in einer Entfernung von den Wellen 1 und 2 und dem flexiblen Element 7 angeordnet, so dass sie die Wellen 1 und 2 sowie das flexible Element 7 nicht berührt. Die Beleuchtungseinheit 19 beleuchtet die Anordnung, damit die reflektorischen Eigenschaften der markanten Punkte im Verfahren genutzt werden können.

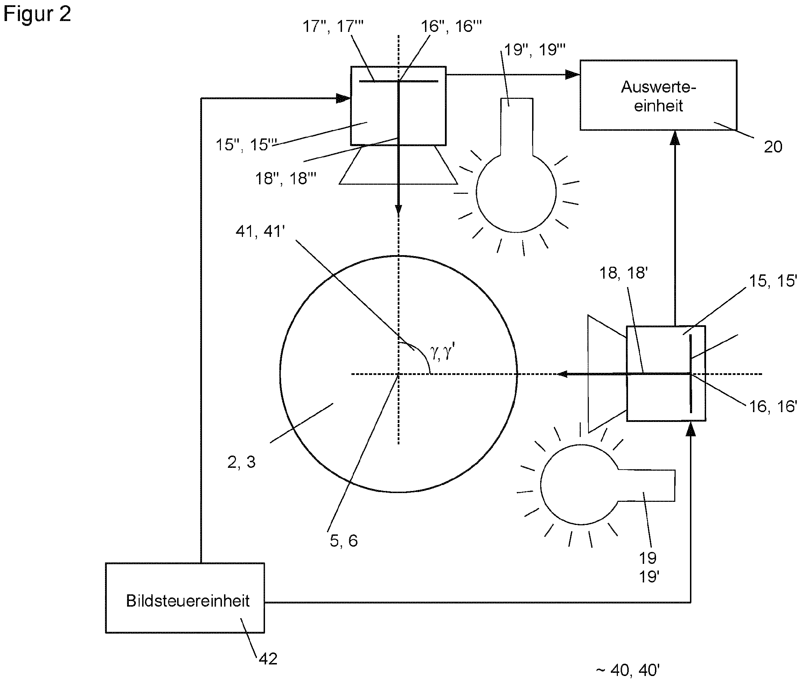

In Figur 1 ist ferner eine Schnittebene 40 dargestellt, die senkrecht zur Bildebene 17 der Kamera 15 angeordnet ist. Optional können in Schnittebene 40 eine weitere Kamera 15" und optional eine weitere Beleuchtungseinheit 19" angeordnet werden. Der senkrecht zur Bildebene 17" von Kamera 15" stehende Normalenvektor 18" ist annähernd orthogonal zu den Rotationsachsen 4 und 5 der Welle 1 und der Welle 2. Eine Position innerhalb einer Bildebene 17" wird mit Hilfe eines zweidimensionalen Bildkoordinatensystems 25" beschrieben. Gemäß Figur 2 wird in der Schnittebene 40 zwischen den Normalenvektoren 18 und 18" der Winkel γ 41 definiert. Der Winkel γ 41 ist beispielsweise orthogonal. Bei bekanntem Winkeln γ 41 und bekannter Skalierung der zweidimensionalen Koordinatensysteme 25 und 25" können die zweidimensionalen Koordinatensysteme 25 und 25" zu einem dreidimensionalen Koordinatensystem kombiniert werden, mit dem die Lage der Rotationsachsen im dreidimensionalen Raum beschrieben werden kann.

Die Kameras 15 und 15" können optional mit Hilfe einer Bildsteuereinheit 42 gesteuert werden. Die Kameras 15 und 15" sind darüber hinaus mit der Auswerteeinheit 20 verbunden, die beispielsweise durch einen Computer mit einem Computerprogramm realisiert wird. Die Auswerteeinheit 20 kann die Auswertungsergebnisse an eine Datensammeleinheit 22 übergeben. Dies ist beispielsweise ein Server im Netzwerk, kann aber alternativ auch als eine Festplatte in einem Computer realisiert werden. Dort ist eine Verknüpfung mit weiteren Daten möglich, beispielsweise mit Zeitangaben, weitere Maschinendaten, Betriebsinformationen und Umgebungsbedingungen. Die Auswerteeinheit 20 kann die Auswertungsergebnisse optional auch an eine Sammelsteuereinheit 21 übergeben. Die Sammelsteuereinheit 21 verwendet die Auswertungsergebnisse zur Generierung von Steuersignalen. Die Sammelsteuereinheit 21 kann sich optional in einem Computernetzwerk befinden.

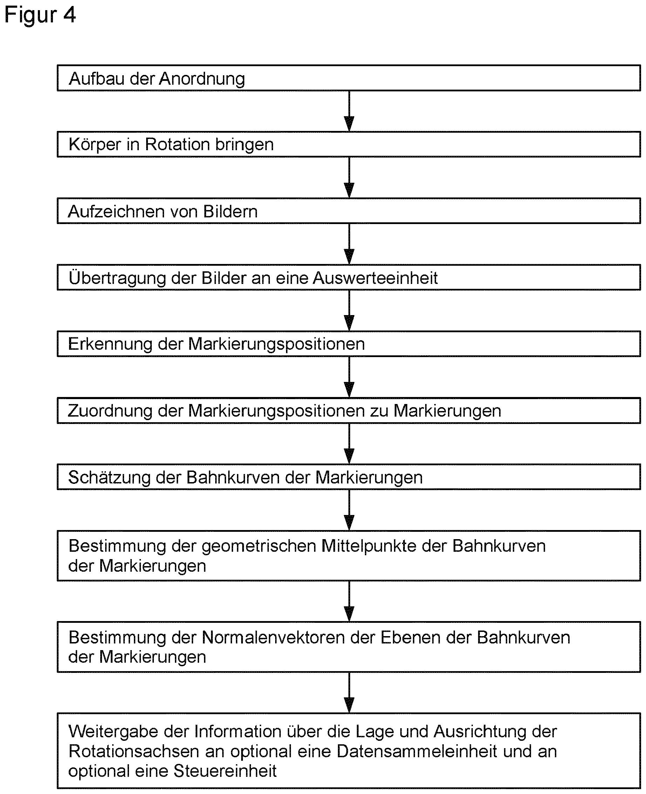

Figur 4 zeigt schematisch die Verfahrensschritte. Es ist zunächst die Anordnung herzustellen. Insbesondere sind die markanten Punkte 9 und 10 anzubringen. Diese markanten Punkte 9 und 10 besitzen im Verhältnis zu ihrer Umgebung besonders gut lichtreflektierende Eigenschaften. Sie sind beispielsweise punktförmig oder streifenförmig auf die Wellenoberfläche aufgebracht und besitzen eine axiale Ausdehnung s. Im Folgenden wird der Strang bestehend aus den Wellen 1 und 2 und dem flexiblen Element 7 in Rotation versetzt. Kamera 15 und optional Kamera 15" zeichnen eine Folge von Bildern auf, die an die Auswerteeinheit 20 übertragen werden.

Optional können Kamera 15 und Kamera 15" durch eine Bildsteuereinheit 42 angesteuert werden, beispielsweise so, dass die Aufnahme der Bilder gleichzeitig erfolgt. Die Auswerteeinheit 20 detektiert die Positionen der markanten Punkte in den Bildern anhand eines Schwellwert-Vergleichs, d.h. alle Bildpunkte mit einem Helligkeitswert oberhalb eines Schwellwertes werden als einem markanten Punkt zugehörig identifiziert. Die Position im Bild einer Kamera 15 und 15" wird beispielsweise über zweidimensionale Koordinatenpaare im jeweiligen Bildkoordinatensystem definiert. Die zweidimensionalen Bildkoordinatensysteme der Kameras 15 und 15" können zu einem dreidimensionalen Koordinatensystem der Anordnung kombiniert werden. Über die axiale Position im Bild wird eine Zuordnung der als markanter Punkt identifizierten Bildpunkte zu einem konkreten markanten Punkt 9 oder 10 durchgeführt. Die Abfolgen der jeweils einem markanten Punkt 9 oder 10 zugeordneten Positionen werden zu zweidimensionalen Bild-Bahnkurven 9Tr oder 10Tr im Bild von Kamera 15 sowie auf die gleiche Weise zu zweidimensionalen Bild-Bahnkurven 9Tr" und 10Tr" im Bild von Kamera 15" in Form von Koordinaten-Paaren zusammengestellt. Beide Kameras 15 und 15" können mit Hilfe der Bildsteuereinheit 42 zeitlich synchronisiert werden.

Bei gleichzeitig aufgenommenen Bildern kann aus den beiden zweidimensionalen Bild-Bahnkurven 9Tr und 9Tr" eine dreidimensionale Bahnkurve für den markanten Punkt 9 in Form von Koordinaten-Triplets im Koordinatensystem der Anordnung erzeugt werden. Ebenso kann bei gleichzeitig aufgenommenen Bildern aus den beiden zweidimensionalen Bahnkurven 10Tr und 10Tr" eine dreidimensionale Bahnkurve in Form von Koordinaten-Triplets für den markanten Punkt 10 angegeben werden. Mit dem Vorwissen einer im Idealfall kreisförmigen ebenen Bahnkurve eines markanten Punktes im Raum und mit einfachen geometrischen Gesetzmäßigkeiten kann aus der Bahnkurve für den markanten Punkt 9 der Mittelpunkt dieser Bahnkurve sowie der zur Bahnkurven-Ebene zugehörige Normalenvektor berechnet werden. Mittelpunkt und Normalenvektor für die Bahnkurve des markanten Punktes 9 beschreiben die Lage der Rotationsachse 4 von Welle 1. Gleichfalls können auf diesem Weg aus der Bahnkurve für den markanten Punkt 10 der Mittelpunkt dieser Bahnkurve sowie der zur Bahnkurve zugehörige Normalenvektor bestimmt werden. Mittelpunkt und Normalenvektor für die Bahnkurve des markanten Punktes 10 beschreiben die Lage der Rotationsachse 5 von Welle 2.

Erfolgt die Aufnahme der Bilder ohne eine Synchronisation durch eine optionale Bildsteuereinheit 42, ist die unmittelbare Angabe der Bahnkurve in dreidimensionalen Koordinaten nicht möglich. Dann kann die Lage der Rotationsachse 4, mit dem Vorwissen einer im Idealfall kreisförmigen, ebenen Bahnkurve des markanten Punktes 9, über ein Optimierungsverfahren geschätzt werden. Dazu wird eine Kostenfunktion definiert, die den Abstand zwischen einer Projektion einer simulierten Bahnkurve des markanten Punktes 9 in die Bildebenen 17 und 17" und den aus den Bildern der Kameras 15 und 15" extrahierten Bild-Bahnkurven 9Tr und 9Tr" bewertet. Für die Kostenfunktion kann beispielsweise die aus der Mathematik bekannte L2-Norm genutzt werden. Das Optimierungsverfahren minimiert die Kostenfunktion in Abhängigkeit vom simulierten der Mittelpunkt der Bahnkurve und deren simulierten Normalenvektor zur Ebene der Bahnkurve. Mittelpunkt und Normalenvektor im Minimum der Kostenfunktion liefern dann die Beschreibung für die Lage Rotationsachse 4. Dieses Verfahren kann sinngemäß auf die Berechnung der Lage der Rotationsachse 5 aus den Bild-Bahnkurven 10Tr und 10Tr" übertragen werden.

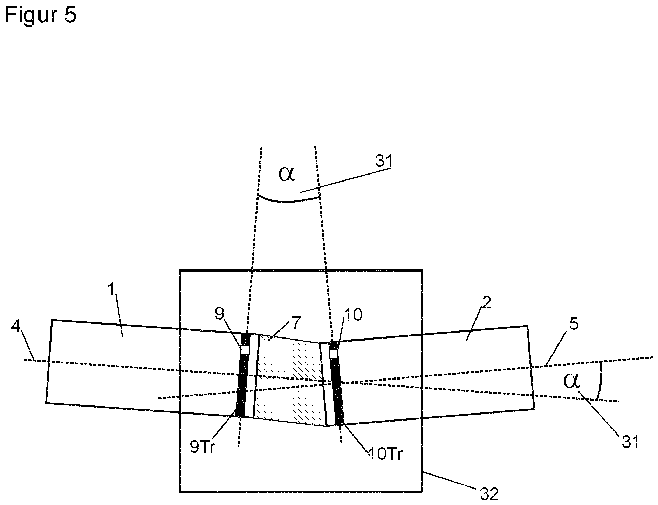

In Figur 5 wird eine spezielle Anordnung auf der Grundlage von Figur 1 gezeigt, bei der sich die Rotationsachsen 4 und 5 der Wellen 1 und 2 in einer räumlichen Ebene befinden und die Position von Kamera 15 so gewählt ist, dass die Kamerabildebene 17 parallel zur Ebene der Rotationsachsen ausgerichtet ist. Eine zweite optionale Kamera 15" ist in diesem vereinfachten Fall nicht notwendig. Das Sichtfeld 32 der Kamera 15 enthält die markanten Punkte 9 und 10, die sich um verschiedene Rotationsachsen bewegen. Dann ergeben sich bei Rotation der Wellen 1 und 2 die Bahnkurven der markanten Punkte 9 und 10, die in der Bildebene 17 der Kamera als lineare Bild-Bahnkurven 9Tr und 10Tr sichtbar werden. Der in der Bildebene 17 liegende Winkel α 31 zwischen den Bild-Bahnkurven 9Tr und 10Tr entspricht dem Winkel α 31 zwischen den Rotationsachsen 4 und 5.

Die in Figur 4 schematisch gezeigten Verfahrensschritte werden auf die Anordnung in Figur 5 übertragen. Es ist zunächst die Anordnung herzustellen. Insbesondere sind die markanten Punkte 9 und 10 anzubringen. Die markanten Punkte 9 und 10 besitzen besonders stark lichtreflektierende Eigenschaften. Sie sind beispielsweise punktförmig oder streifenförmig auf die Wellenoberfläche aufgebracht und besitzen eine axiale Ausdehnung s. Im Folgenden wird der Strang bestehend aus den Wellen 1 und 2 und dem flexiblen Element 7 in Rotation versetzt. Die Kamera 15 zeichnet eine Folge von Bildern auf, die an die Auswerteeinheit 20 übertragen werden. Die Auswerteeinheit 20 detektiert die Positionen der markanten Punkte in den Bildern anhand eines Schwellwert-Vergleichs, d.h. alle Bildpunkte mit einem Helligkeitswert, der einen gegebenen Schwellwert überschreitet, werden als einem markanten Punkt zugehörig identifiziert. Über die axiale Position im Bildbereich wird eine Zuordnung der als markante Punkte identifizierten Bildpunkte zu einem konkreten markanten Punkt 9 oder 10 durchgeführt.

Für jeden markanten Punkt wird über eine Ausgleichsrechnung eine Strecke berechnet, die die Bild-Bahnkurven 9Tr und 10Tr der markanten Punkte 9 und 10 approximiert. Der jeweilige Streckenmittelpunkt markiert den Mittelpunkt der Bahnkurve des jeweiligen markanten Punktes und die Senkrechte zurjeweiligen Strecke den Normalenvektor der Bahnkurvenebene des jeweiligen markanten Punktes. Der vorgenannte Mittelpunkt und der vorgenannte Normalenvektor beschreiben die Lage der zugehörigen Rotationsachse. Um die Lage der Rotationsachsen 4 und 5 zueinander auf alternative Weise zu erfassen, wird der Winkel α 31 zwischen ihnen berechnet. Der Winkel α 31 ist gleichzeitig der Winkel zwischen den Bild-Bahnkurven 9Tr und 10Tr. Um den Winkel α 31 zwischen den Bild-Bahnkurven 9Tr und 10Tr der markanten Punkte 9 und 10 zu berechnen, werden die per Ausgleichsrechnung bestimmten Strecken der Bild-Bahnkurven 9Tr und 10Tr für die markanten Punkte 9 und 10 so extrapoliert, dass ein Schnittpunkt zwischen den vorgenannten extrapolierten Strecken entsteht und der Winkel α 31 bestimmt werden kann. Der Wert für den Winkel α 31 wird an eine Sammelsteuereinheit 21 übergeben. Für eine spätere Analyse, vor allem der zeitlichen Veränderung, wird der Winkel α 31 in einer Datensammeleinheit 22 abgelegt. Dort ist eine Verknüpfung mit weiteren Daten möglich, beispielsweise mit Zeitangaben, weitere Maschinendaten, Betriebsinformationen und Umgebungsbedingungen.

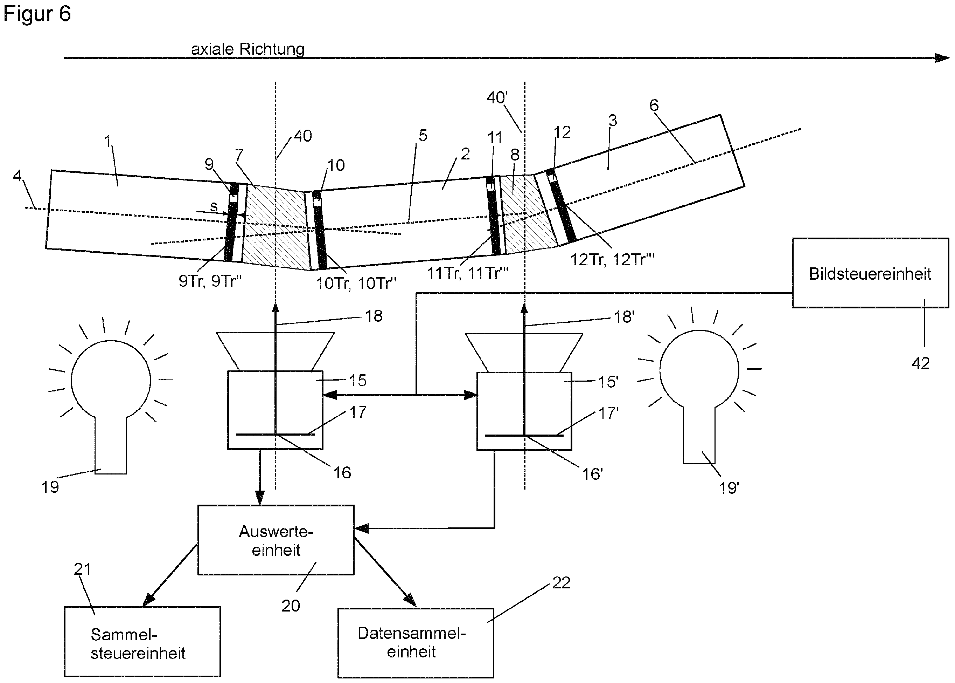

In Figur 6 wird eine weitere beispielhafte Anordnung gezeigt, die die Anordnung aus den Figuren 1 bis 3 erweitert. Der Wellenstrang wird um einen dritten Körper, der als Welle 3 ausgeführt ist, und ein flexibles Element 8 ergänzt. Welle 3 kann eine rotierende Bewegung um eine Rotationsachse 6 ausführen. Welle 3 ist über das flexible Element 8 mit Welle 2 gekoppelt, das eine Drehbewegung von Welle 2 auf Welle 3 oder von Welle 3 auf Welle 2 übertragen kann. Diese Anordnung ist typisch für die Kopplung zweier rotierender Wellen mit Hilfe einer flexiblen Kupplung, wie sie beispielsweise in Windkraftanlagen vorgefunden werden kann. Welle 3 besitzt einen markanten Punkt 12. Darüber hinaus wird ein weiterer markanter Punkt 11 auf Welle 2 angebracht. Kamera 15 und Kamera 15' sind in axialer Richtung auf Höhe der flexiblen Elemente 7 und 8 angeordnet.

Darüber hinaus wird eine Schnittebene 40 definiert, die sich in axialer Richtung auf Höhe von Kamera 15 befindet. Darüber hinaus wird eine Schnittebene 40' definiert, die sich in axialer Richtung auf Höhe von Kamera 15' befindet. Optional wird in Schnittebene 40 eine weitere Kamera 15" in einem Winkel γ 41 angeordnet. Optional wird in Schnittebene 40' eine weitere Kamera 15‴ in einem Winkel γ' 41' angeordnet. Die Winkel γ 41 und γ' 41' sind beispielsweise orthogonal. Die jeweiligen vom Bildmittelpunkt 16, 16', 16" und 16‴ ausgehenden Normalenvektoren 18, 18', 18" und 18‴ der Bildebenen 17, 17', 17" und 17‴ zeigen in Richtung der Rotationsachsen 4, 5 und 6. Der Winkel zwischen den vorhergenannten Normalenvektoren und Rotationsachsen beträgt etwa 90°. Da die Rotationsachsen jedoch im Allgemeinen eine leicht voneinander abweichende Ausrichtung besitzen, können die 90° nur annähernd eingehalten werden. Die Kameras 15, 15', 15" und 15‴ sind in einer Entfernung von den Wellen 1, 2 und 3 und den flexiblen Element 7 und 8 angeordnet, so dass sie die Wellen 1, 2 und 3 sowie die flexiblen Elemente 7 und 8 nicht berühren.

Die Kameras 15, 15', 15" und 15‴ können optional mit Hilfe einer Bildsteuereinheit 42 gesteuert werden. Die Kameras 15, 15', 15" und 15‴ sind mit der Auswerteeinheit 20 verbunden, die beispielsweise durch einen Computer mit einem Computerprogramm realisiert wird. Die Auswerteeinheit 20 kann die Auswertungsergebnisse an eine Datensammeleinheit 22 übergeben. Dies ist beispielsweise ein Server im Netzwerk, kann aber alternativ auch als eine Festplatte in einem Computer realisiert werden. Dort ist eine Verknüpfung mit weiteren Daten möglich, beispielsweise mit Zeitangaben, weitere Maschinendaten, Betriebsinformationen und Umgebungsbedingungen. Die Auswerteeinheit 20 kann die Auswertungsergebnisse optional auch an eine Sammelsteuereinheit 21 übergeben. Die Sammelsteuereinheit 21 verwendet die Auswertungsergebnisse zur Generierung von Steuersignalen. Die Sammelsteuereinheit 21 kann sich optional in einem Computernetzwerk befinden.

Das in Figur 4 gezeigte Verfahrensschema wird in der gleichen Art und Weise, wie für die Anordnung in Figur 1 beschrieben, auf die Elemente dieser Anordnung angewendet. Insbesondere werden die Verfahrensschritte, die für die Bilder des Kamerapaares 15 und 15" beschrieben werden, hier auf die Bilder des Kamerapaares 15' und 15‴ angewendet sowie die Lage der Rotationsachsen 5 und 6 ermittelt. Die räumliche Lage der von beiden Kamerapaaren gebildeten Koordinatensysteme zueinander kann berechnet werden, in dem die aus der Bahnkurve des markanten Punktes 10 und der Bahnkurve des markanten Punktes 11 berechneten Lagen der Rotationsachse 5 gleichgesetzt werden unter Verwendung der Annahme einer starren geraden Welle und dem gegebenen axialen Abstand P der markanten Punkte 10 und 11. Damit ist mit Hilfe einfacher geometrischer Beziehungen möglich, die räumliche Lage der Rotationsachsen 4 und 6 der Wellen 1 und 3 zueinander zu bestimmen.

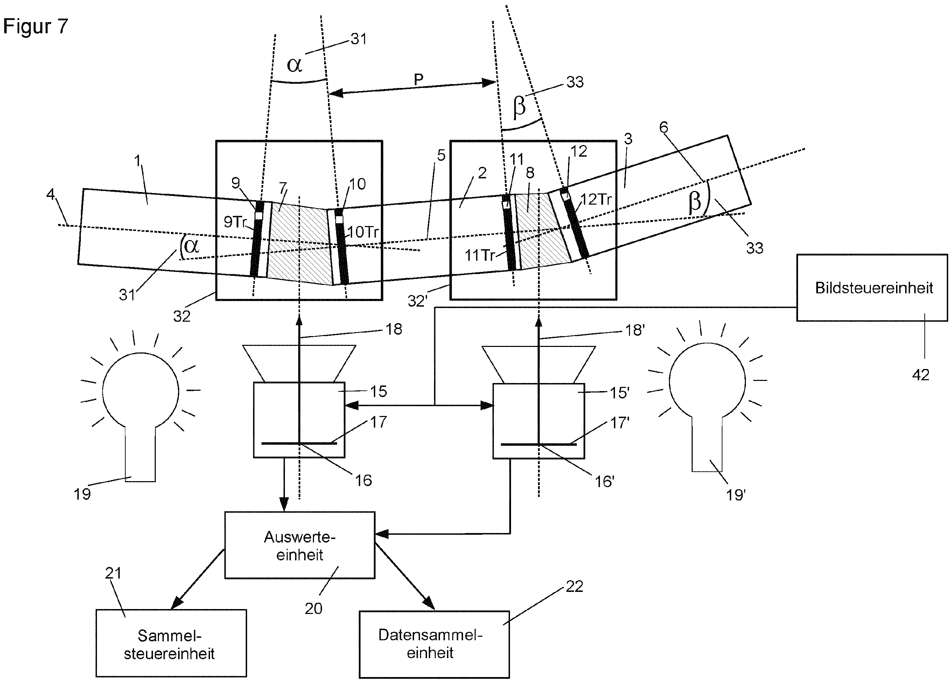

In Figur 7 wird eine spezielle Anordnung auf der Grundlage von Figur 6 gezeigt, bei der sich die Rotationsachsen 4, 5 und 6 in einer Ebene befinden und die Positionen von Kamera 15 und 15' so gewählt sind, dass die Kamerabildebenen 17 und 17' parallel zur Ebene der Rotationsachsen ausgerichtet sind. Die Kameras 15" und 15‴ sind in dieser Anordnung nicht notwendig. Das Sichtfeld 32 der Kamera 15 umfasst zwei markante Punkte, die sich um die Rotationsachsen 4 und 5 bewegen. Das Sichtfeld 32' der Kamera 15' umfasst zwei markante Punkte, die sich um die Rotationsachsen 5 und 6 bewegen.

Bei Rotation der Wellen 1 und 2 ergeben sich die Bahnkurven der markanten Punkte 9 und 10, die in der Bildebene 17 der Kamera 15 als lineare Bild-Bahnkurve 9Tr und 10Tr sichtbar werden. Der in der Bildebene 17 liegende Winkel α 31 zwischen den Bild-Bahnkurven 9Tr und 10Tr entspricht dem Winkel α 31 zwischen den Rotationsachsen 4 und 5. Bei Rotation der Wellen 2 und 3 ergeben sich die Bahnkurven der markanten Punkte 11 und 12, die in der Bildebene 17' der Kamera 15' als lineare Bild-Bahnkurve 11Tr und 12Tr sichtbar werden. Der in der Bildebene 17' liegende Winkel β 33 zwischen den Bild-Bahnkurven 11Tr und 12Tr entspricht dem Winkel β 33 zwischen den Rotationsachsen 5 und 6.

Das in Figur 4 gezeigte Verfahrensschema wird in der gleichen Art und Weise, wie für die Anordnung in Figur 5 beschrieben, auf die Elemente dieser Anordnung angewendet. Insbesondere werden die Verfahrensschritte, die für die Bilder der Kamera 15 beschrieben werden, hier auf die Bilder der Kamera 15' angewendet sowie die Lage der Rotationsachsen 5 und 6 ermittelt. Insbesondere wird in Ergänzung zur Beschreibung von Figur 5, um die Lage der Rotationsachsen 5 und 6 zueinander zu erfassen, der Winkel β 33 zwischen ihnen berechnet. Der Winkel β 33 ist gleichzeitig der Winkel zwischen den Bild-Bahnkurven 11Tr und 12Tr. Um den Winkel β 33 zwischen den Bild-Bahnkurven 11Tr und 12Tr der markanten Punkte 11 und 12 zu berechnen, werden die per Ausgleichsrechnung bestimmten Strecken der Bild-Bahnkurven 11Tr und 12Tr für die markanten Punkte 11 und 12 so extrapoliert, dass ein Schnittpunkt zwischen den vorgenannten extrapolierten Strecken entsteht und der Winkel β 33 bestimmt werden kann. Die Werte für die Winkel α 31 und β 33 werden an eine Sammelsteuereinheit 21 übergeben. Für eine spätere Analyse, vor allem die Analyse der zeitlichen Veränderung, werden die Winkel α 31 und β 33 in einer Datensammeleinheit 22 abgelegt. Dort ist eine Verknüpfung mit weiteren Daten möglich, beispielsweise mit Zeitangaben, weitere Maschinendaten, Betriebsinformationen und Umgebungsbedingungen.

Mit Nutzung des axialen Abstandes P zwischen den markanten Punkten 10 und 11 kann die Neigung der Rotationsachsen 4 und 6 zueinander sowie die Mittelpunktverschiebung zwischen den Rotationsachsen 4 und 6 über einfache geometrische Beziehungen berechnet werden.

## Patentansprüche

1. Anordnung, die mehrere Körper (1, 2) enthält, die ausgebildet sind, um eine oder mehrere Rotationsachsen (4, 5) zu rotieren, wobei auf jedem dieser Körper (1, 2) ein oder mehrere markante Punkte (9, 10) in einem radialen Abstand von der einen oder mehreren Rotationsachsen (4,5) vorhanden sind, **dadurch gekennzeichnet, dass**
es eine oder mehrere bildgebende Einheiten (15, 15") gibt, die geeignet sind, während einer Rotation der mehreren Körper (1, 2) um die eine oder mehreren Rotationsachsen (4, 5) die markanten Punkte (9, 10) auf eine oder mehrere Bildebenen (17, 17") abzubilden und aus diesen Abbildungen ein Bild oder mehrere Bilder zu erzeugen,
die bildgebenden Einheiten (15, 15") von den Körpern (1, 2) berührungsfrei beabstandet sind,
es eine Auswerteeinheit (20) gibt, die dazu eingerichtet ist, in einem oder mehreren Bildern Positionen (9Tr, 10Tr) der markanten Punkte (9, 10) im Bild anhand ihrer spezifischen, von ihrer Umgebung verschiedenen, Merkmale festzustellen, aus den Positionen (9Tr, 10Tr) der markanten Punkte (9, 10) in dem einen oder mehreren Bildern Teile von Bahnkurven der markanten Punkte (9, 10) zu bestimmen und aus den Bahnkurven der markanten Punkte (9, 10) eine Lage der Rotationsachsen (4, 5) der rotierenden Körper (1, 2) zueinander zu ermitteln.

2. Anordnung nach Anspruch 1, **dadurch gekennzeichnet, dass** die bildgebenden Einheiten Kameras (15, 15") sind.

3. Anordnung nach einem der vorhergehenden Ansprüche, **dadurch gekennzeichnet, dass** es eine Bildsteuereinheit (42) gibt, die dazu eingerichtet ist, mehrere bildgebende Einheiten (15, 15") in Beziehung zueinander zu steuern.

4. Anordnung nach einem der vorhergehenden Ansprüche, **gekennzeichnet durch** eine oder mehrere Beleuchtungseinheiten (19, 19"), die dazu eingerichtet sind, in den von den bildgebenden Einheiten (15, 15") erzeugten Bildern die Unterscheidbarkeit der markanten Punkte (9, 10) von ihrer Umgebung zu verbessern.

5. Anordnung nach einem der vorhergehenden Ansprüche, **dadurch gekennzeichnet, dass** die Körper (1, 2) miteinander verbunden sind.

6. Anordnung nach einem der Ansprüche 4 oder 5, **dadurch gekennzeichnet, dass** sich die Rotationsachsen (4, 5) der Körper (1, 2) in einer Ebene befinden.

7. Anordnung nach einem der vorhergehenden Ansprüche, **dadurch gekennzeichnet, dass** es eine Datensammeleinheit (22) gibt, die dazu eingerichtet ist, die Lage der Rotationsachsen (4, 5) als Daten zu speichern und mit anderen Daten zu verknüpfen.

8. Anordnung nach einem der vorhergehenden Ansprüche, **dadurch gekennzeichnet, dass** es eine Sammelsteuereinheit (21) gibt, die dazu eingerichtet ist, die Daten, die die Lage der Rotationsachsen (4, 5) beschreiben, zu empfangen.

9. Verfahren unter Verwendung einer Anordnung aus den vorherigen Ansprüchen, **dadurch gekennzeichnet, dass**
ein oder mehrere markante Punkte (9, 10) auf mehreren Körpern (1, 2) angebracht oder ausgewählt werden,
die Körper (1, 2) in Rotation gebracht werden,
die markanten Punkte (9, 10) in mehreren Positionen mit einem bildgebenden Verfahren von den bildgebenden Einheiten (15, 15") aufgezeichnet werden,
die aufgezeichneten Bilder an eine Auswerteeinheit (20) übertragen werden,
die Positionen (9Tr, 10Tr) der markanten Punkte (9, 10) in den aufgezeichneten Bildern anhand ihrer spezifischen, von ihrer Umgebung verschiedenen, Merkmale erkannt werden,
aus den Positionen (9Tr, 10Tr) der markanten Punkte (9, 10) in den aufgezeichneten Bildern Teile der Bahnkurven der markanten Punkte bestimmt werden,
aus den Bahnkurven der markanten Punkte (9, 10) die Lage der Rotationsachsen der Körper zueinander bestimmt werden.

10. Verfahren nach Anspruch 9, **gekennzeichnet durch** die zeitliche Synchronisierung verschiedener bildgebender Einheiten (15, 15") für die Aufzeichnung der Bilder.

## Claims

1. An arrangement including a plurality of bodies (1, 2) which are configured to rotate about one or more axes of rotation (4, 5), wherein on each of these bodies (1, 2) one or more distinctive points (9, 10) are provided at a radial distance from the one or more axes of rotation (4, 5), **characterized in that**
there are one or more imaging units (15, 15") which are suitable for imaging the distinctive points (9, 10) onto one or more image planes (17, 17') during a rotation of the plurality of bodies (1, 2) about the one or more axes of rotation (4, 5) and for generating one or more images from these images,
the imaging units (15, 15") are spaced apart from the bodies (1, 2) without making contact,
there is an evaluation unit (20) which is configured to determine in one or more images positions (9Tr, 10Tr) of the distinctive points (9, 10) in the image on the basis of their specific features which differ from their surroundings, to determine from the positions (9Tr, 10Tr) of the distinctive points (9, 10) in the one or more images parts of trajectories of the distinctive points (9, 10) and to determine a location of the axes of rotation (4, 5) of the rotating bodies (1, 2) relative to one another from the trajectories of the distinctive points (9, 10).

2. The arrangement according to claim 1, **characterized in that** the imaging units are cameras (15, 15").

3. The arrangement according to any one of the preceding claims, **characterized in that** there is an image control unit (42) which is configured to control a plurality of imaging units (15, 15") in relation to one another.

4. The arrangement according to any one of the preceding claims, **characterized by** one or more illumination units (19, 19"), which are configured to improve the distinguishability of the distinctive points (9, 10) from their surroundings in the images generated by the imaging units (15, 15").

5. The arrangement according to any one of the preceding claims, **characterized in that** the bodies (1, 2) are connected to one another.

6. The arrangement according to any one of the claims 4 or 5, **characterized in that** the axes of rotation (4, 5) of the bodies (1, 2) are located in one plane.

7. The arrangement according to any one of the preceding claims, **characterized in that** a data collection unit (22) is provided which is configured to store the location of the axes of rotation (4, 5) as data and to link this to other data.

8. The arrangement according to any one of the preceding claims, **characterized in that** a collection control unit (21) is provided which is configured to receive the data describing the location of the axes of rotation (4, 5).

9. A method using an arrangement of the preceding claims, **characterized in that**
one or more distinctive points (9, 10) are applied or selected on a plurality of bodies (1, 2),
the bodies (1, 2) are set into rotation,
the distinctive points (9, 10) are recorded in several positions by using an imaging method by the imaging units (15, 15"),
the recorded images are transmitted to an evaluation unit (20),
the positions (9Tr, 10Tr) of the distinctive points (9, 10) in the recorded images are identified based of their specific features which differ from their surroundings,
parts of the trajectories of the distinctive points are determined from the positions (9Tr, 10Tr) of the distinctive points (9, 10) in the recorded images,
the location of the axes of rotation of the bodies relative to one another is determined from the trajectories of the distinctive points (9, 10).

10. The method according to claim 9, **characterized by** the temporal synchronization of different imaging units (15, 15") for recording the images.

## Revendications

1. Agencement comprenant une pluralité de corps (1, 2) qui sont réalisés pour tourner autour d'un ou plusieurs axes de rotation (4, 5), un ou plusieurs points saillants (9, 10) étant situés sur chacun desdits corps (1, 2) à une distance radiale des un ou plusieurs axes de rotation (4, 5), **caractérisé en ce que**
il y a une ou plusieurs unités d'imagerie (15, 15") qui sont conçues pour représenter les points saillants (9, 10) sur un ou plusieurs plans d'image (17, 17") et pour générer une ou plusieurs images à partir de ces représentations, lors d'une rotation de la pluralité de corps (1, 2) autour des un ou plusieurs axes de rotation (4, 5),
les unités d'imagerie (15, 15") sont espacées des corps (1, 2) sans contact,
il existe une unité d'évaluation (20) qui est configurée pour identifier des positions (9Tr, 10Tr) des points saillants (9, 10) dans l'image dans une ou plusieurs images sur la base de leurs caractéristiques spécifiques qui diffèrent de leur environnement, pour déterminer, à partir des positions (9Tr, 10Tr) des points saillants (9, 10) dans les une ou plusieurs images, des parties des courbes de trajectoire des points saillants (9, 10) et pour déterminer, à partir des courbes de trajectoire des points saillants (9, 10), une orientation des axes de rotation (4, 5) des corps rotatifs (1, 2) les uns par rapport aux autres.

2. Agencement selon la revendication 1, **caractérisé en ce que** les unités d'imagerie (15, 15") sont des caméras.

3. Agencement selon l'une quelconque des revendications précédentes, **caractérisé en ce qu'**il existe une unité de commande d'image (42) qui est configurée pour commander une pluralité d'unités d'imagerie (15, 15") les unes par rapport aux autres.

4. Agencement selon l'une des revendications précédentes, **caractérisé par** une ou plusieurs unités d'éclairage (19, 19") qui sont configurées pour améliorer le caractère distinctif des points saillants (9, 10) dans les images générées par les unités d'imagerie (15, 15") par rapport à leur environnement.

5. Agencement selon l'une quelconque des revendications précédentes, **caractérisé en ce que** les corps (1, 2) sont reliés entre eux.

6. Agencement selon l'une des revendications 4 ou 5, **caractérisé en ce que** les axes de rotation (4, 5) des corps (1, 2) sont dans un seul plan.

7. Agencement selon l'une quelconque des revendications précédentes, **caractérisé en ce qu'**il existe une unité de collecte de données (22) qui est configurée pour stocker l'orientation des axes de rotation (4, 5) sous la forme de données et pour la relier à d'autres données.

8. Agencement selon l'une quelconque des revendications précédentes, **caractérisé en ce qu'**il existe une unité de commande de collecte (21) qui est configurée pour recevoir les données décrivant l'orientation des axes de rotation (4, 5).

9. Procédé d'utilisation d'un agencement des revendications précédentes, **caractérisé en ce que**
un ou plusieurs points saillants (9, 10) sont apposés ou sélectionnés sur une pluralité de corps (1, 2),
les corps (1, 2) sont mis en rotation
les points saillants (9, 10) sont enregistrés dans plusieurs positions par les unités d'imagerie (15, 15") à l'aide d'un procédé d'imagerie,
les images enregistrées sont transmises à une unité d'évaluation (20),
les positions (9Tr, 10Tr) des points saillants (9, 10) dans les images enregistrées sont reconnues en fonction de leurs caractéristiques spécifiques différentes par rapport à leur environnement,
des parties des courbes de trajectoire des points saillants sont déterminées à partir des positions (9Tr, 10Tr) des points saillants (9, 10) dans les images enregistrées,
les orientations des axes de rotation des corps les uns par rapport aux autres sont déterminées à partir des courbes de trajectoire des points saillants (9, 10).

10. Procédé selon la revendication 9, **caractérisé par** la synchronisation temporelle de différentes unités d'imagerie (15, 15") pour enregistrer les images.
